# DEMANDE DE BREVET EUROPEEN

(11) **EP 1 198 047 A1**
(43) Date de publication de la demande: **17.04.2002**
(21) Numéro de dépôt: 01402595.1
(22) Date de dépôt: 08.10.2001
(51) Int. Cl.: H02H 3/093

(54) **Limiteur de puissance électrique consommée dans une installation**

(30) Priorité: 13.10.2000 FR 0013169
(71) Demandeur: Electricité de France, 75008 Paris (FR)
(72) Inventeur: Neugnot, Michel, 21140 Semur en Auxois (FR); Michaud, Jean-Pierre, 01160 Neuville Sur Ain (FR)
(74) Mandataire: Habasque, Etienne Joel Jean-François

(57) **Abrégé**

Limiteur de puissance électrique consommée dans une installation, caractérisé en ce qu'il comprend des moyens (1) de mesure du courant circulant dans un conducteur (2,4) d'alimentation de l'installation, des moyens d'analyse dudit courant en fonction d'un seuil d'intensité admissible et des moyens (3) d'interruption du courant sur le conducteur d'alimentation (2,4) en cas de dépassement dudit seuil d'intensité.

## Description

La présente invention est relative aux limiteurs de puissance électrique et se rapporte plus particulièrement à un limiteur électronique de la consommation de puissance électrique.

Il existe déjà des dispositifs permettant de limiter la puissance électrique, notamment pour proposer à un client une solution alternative à une suspension de fourniture d'énergie électrique en cas de non-paiement des factures d'énergie.

Par exemple, on peut citer les disjoncteurs de limitation de puissance réglés à une faible intensité. Un tel disjoncteur est d'une utilisation simple car il peut être réenclenché manuellement par un client, mais il nécessite un montage complexe.

On peut citer également l'utilisation d'un fusible ayant un calibre d'intensité déterminé en fonction de la limitation de puissance désirée. Le fusible est très simple à installer, mais il présente l'inconvénient de provoquer une coupure définitive de l'alimentation en cas de dépassement du seuil d'intensité.

Enfin, on peut citer l'utilisation de dispositifs associant un fusible et un bilame. Le bilame a l'avantage de se réenclencher automatiquement après un dépassement du seuil d'intensité choisi. Il présente en revanche l'inconvénient de ne pas pouvoir couper de très faibles intensités. De plus, chaque bilame possède sa propre courbe de réponse et ne peut donc pas être programmé à volonté.

Dans ces techniques existantes, la courbe de réponse du dispositif (qui relie l'intensité au temps d'ouverture du circuit) est imposée par le choix des composants. De plus, les incertitudes importantes dues à la conception font que la courbe de fonctionnement est en fait une zone de fonctionnement.

L'invention vise à remédier aux inconvénients des dispositifs connus en créant un limiteur de puissance qui permette de déconnecter une installation électrique située en aval du limiteur dès que les conditions de fonctionnement de l'installation nécessitent une coupure.

Elle a donc pour objet un limiteur de puissance électrique consommée dans une installation, caractérisé en ce qu'il comprend des moyens de mesure du courant circulant dans un conducteur d'alimentation de l'installation, des moyens d'analyse dudit courant en fonction d'un seuil d'intensité admissible et des moyens d'interruption du courant sur le conducteur d'alimentation en cas de dépassement dudit seuil d'intensité.

Suivant d'autres caractéristiques de l'invention :
- les moyens de mesure du courant circulant dans le conducteur d'alimentation de l'installation comprennent un transformateur de courant comprenant un enroulement entourant le conducteur d'alimentation et lesdits moyens d'analyse comprennent un microprocesseur programmé pour commander l'ouverture et la fermeture des moyens d'interruption en fonction de conditions d'intensité et de temps de dépassement prédéterminées ;
- aux moyens d'analyse sont associés des moyens de réglage desdites conditions d'interruption et de rétablissement du courant dans le conducteur d'alimentation ;
- les moyens de mesure du courant circulant dans le conducteur d'alimentation comprennent une résistance connectée en série dans ledit conducteur, et les moyens d'analyse comprennent un comparateur recevant sur une de ses entrées la tension U détectée engendrée aux bornes de la résistance et connecté par son autre entrée à une tension de référence Uref correspondant au seuil de déclenchement de l'interruption du courant dans le conducteur d'alimentation ;
- à la sortie du comparateur sont connectés des moyens de réglage des conditions d'actionnement des moyens de coupure du courant dans le conducteur d'alimentation ;
- lesdits moyens de réglage comportent un amplificateur auquel est associé un circuit de réglage du temps de déclenchement du signal de commande des moyens de coupure ;
- les moyens de coupure comprennent un interrupteur commandé par un enroulement connecté à la sortie desdits moyens d'analyse ;
- ledit enroulement est connecté au moyen d'analyse par l'intermédiaire desdits moyens de réglage.

L'invention sera mieux comprise à la lecture de la description qui va suivre, donnée uniquement à titre d'exemple et faite en se référant aux dessins annexés, sur lesquels :
- la Fig.1 est un schéma synoptique du limiteur de puissance suivant l'invention ;
- la Fig.2 est un schéma détaillé d'un premier mode de réalisation du limiteur de puissance suivant l'invention ;
- la Fig.3 est un schéma détaillé d'un second mode de réalisation du limiteur de puissance suivant l'invention ; et
- la Fig.4 est un graphique montrant le fonctionnement du limiteur de puissance suivant l'invention en fonction de l'intensité du courant qui le parcourt.

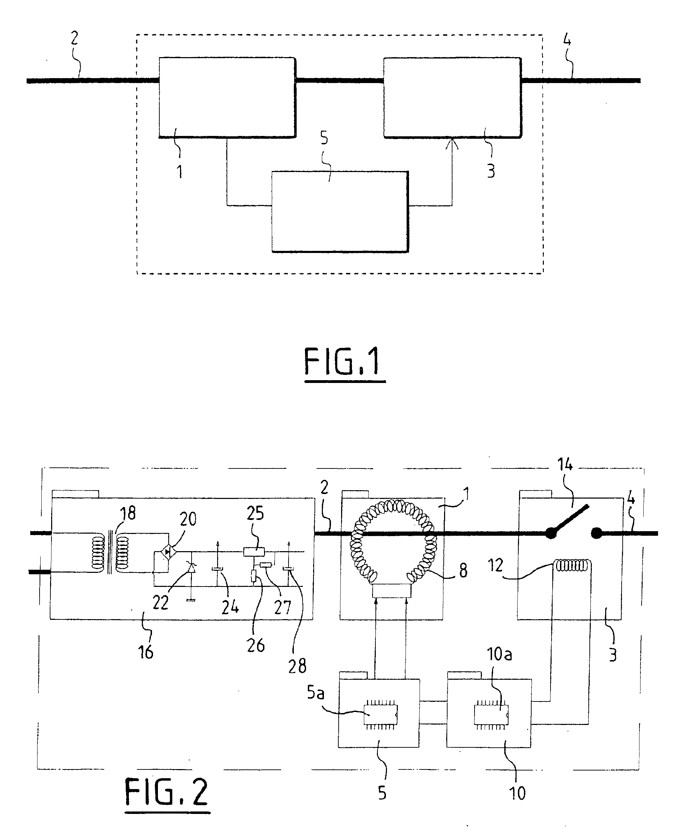

Le limiteur de puissance représenté schématiquement à la figure 1 comporte une carte électronique installée en série dans une installation électrique à surveiller.

Cette carte comporte un circuit de mesure 1 dont l'entrée est reliée à au moins un conducteur d'arrivée 2, de préférence un conducteur de phase et dont la sortie est reliée à l'entrée d'un interrupteur commandé 3.

La sortie de l'interrupteur commandé 3 est reliée à un conducteur de départ 4 relié à une installation à surveiller non représentée.

Les conducteurs 2 et 4 forment un conducteur d'alimentation de l'installation.

Entre le circuit de mesure 1 et l'interrupteur commandé 3, est en outre connecté un circuit d'analyse 5.

Le courant traversant l'installation est analysé par le circuit de mesure 1 et par le circuit d'analyse 5.

En fonction du dépassement ou non d'un seuil d'intensité fixé, il y a commande ou non de l'ouverture de l'interrupteur 3 du type à relais.

Dans une variante préférée de l'invention, le limiteur est programmable.

On peut par exemple paramétrer plusieurs seuils d'intensité en affectant à chacun un temps d'attente avant d'ordonner l'ouverture de l'interrupteur 3.

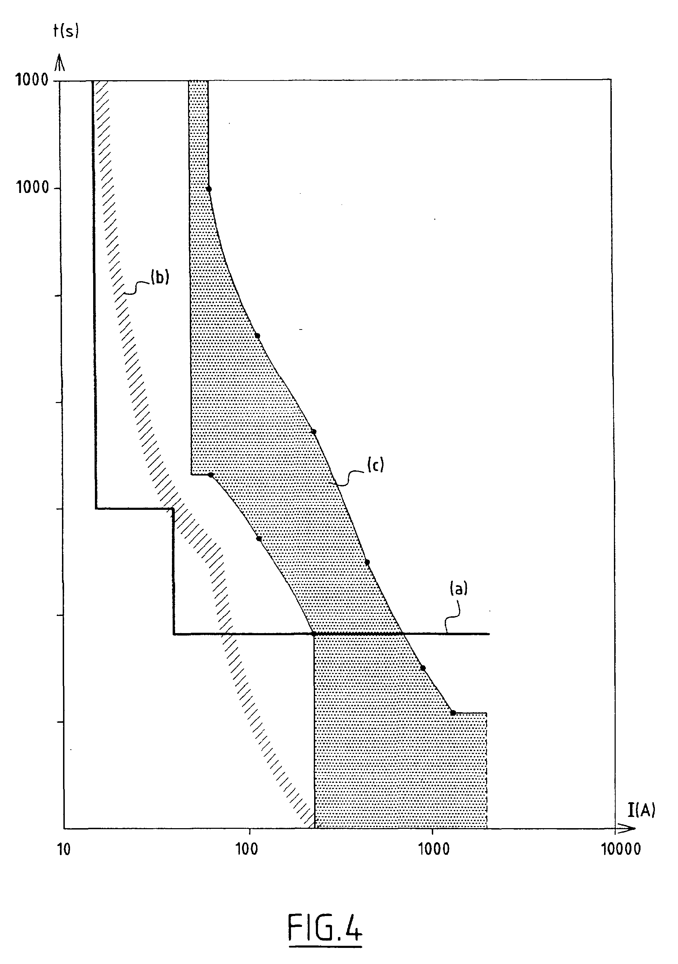

On obtient alors une courbe de réponse telle que celle représentée à la figure 4 qui est totalement paramétrable et extrêmement précise, contrairement aux courbes de réponse des agencements connus.

Le limiteur de puissance représenté à la figure 2 comporte un élément de mesure 1 qui comprend un transformateur de courant formé du conducteur d'arrivée 2 entouré par un enroulement 8 formant secondaire du transformateur.

Aux bornes de l'enroulement secondaire 8 est connecté le circuit d'analyse 5 tel qu'un microprocesseur 5a à la sortie duquel est connecté un circuit de réglage 10 qui comporte également un microprocesseur 10a.

La sortie du circuit de réglage 10 est connectée aux bornes d'un enroulement 12 de l'interrupteur commandé 3, ledit enroulement 12 étant associé à un interrupteur 14 proprement dit.

Le conducteur 2 est relié au secteur 15 par l'intermédiaire d'un circuit d'alimentation 16 en courant continu qui comprend un transformateur 18 au secondaire duquel est relié à un redresseur en pont 20 aux bornes de sortie duquel sont connectés une diode Zener 22 et un condensateur 24. En parallèle, sur le condensateur 24 est connecté un circuit de régulation 25 comprenant deux résistances 26,27.

A la sortie du régulateur 25 est connecté un condensateur 28 de limitation de la tension continue de sortie du circuit d'alimentation à 5 volts par exemple.

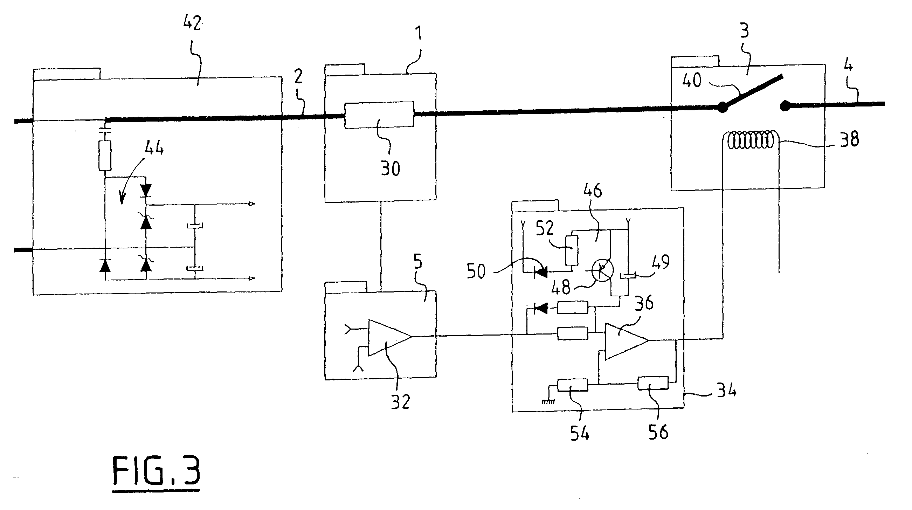

Selon le mode de réalisation de la figure 3, le dispositif de mesure 1 comporte une résistance 30 connectée en série sur le conducteur 2.

La résistance 30 parcourue par le courant à mesurer présente à ses bornes, une tension U détectée.

Un dispositif d'analyse 5 comporte un comparateur 32 de la tension U détectée à une tension de référence Uref.

La sortie du comparateur 32 est connectée à l'entrée d'un circuit de réglage 34 comprenant essentiellement un amplificateur 36 d'alimentation d'un enroulement 38 de commande d'un interrupteur 40 qui forme un interrupteur commandé branché au conducteur de sortie 4.

Au conducteur d'entrée 2 est relié un circuit d'alimentation 42 en courant continu à partir du secteur alternatif, comprenant un convertisseur de tension 44 qui délivre sur le conducteur 2 une tension continue correspondant au secteur d'alimentation en courant alternatif et qui fournit en outre la tension d'alimentation nécessaire au fonctionnement du circuit de réglage 34.

A l'amplificateur 36 est associé un circuit 37 de réglage du temps de déclenchement par décharge capacitive comprenant un transistor 48 aux bornes duquel est connecté un condensateur 49.

La base du transistor est connectée à une tension continue par l'intermédiaire d'une diode 50, tandis que son trajet émetteur-collecteur est connecté en parallèle sur le condensateur 49.

Entre la base et l'émetteur du transistor 48 est connectée une résistance 52.

Le collecteur du transistor 48 et le condensateur 49 sont connectés à une borne d'entrée de l'amplificateur 36, tandis qu'à son autre borne d'entrée est reliée une résistance 54.

Une résistance de contre-réaction 56 est connectée entre cette autre entrée et la sortie de l'amplificateur 36 reliée à l'enroulement 38 de l'interrupteur commandé.

L'agencement qui vient d'être décrit est placé en série dans une installation électrique et permet de fixer un seuil d'intensité au-delà duquel on souhaite une coupure de l'alimentation.

Dans le mode de réalisation de la figure 2, ce seuil est fixé par programmation du microprocesseur 5a du circuit d'analyse 5.

Dans le mode de réalisation de la figure 3, ce seuil est déterminé par la tension de référence Uref appliquée au comparateur 32.

Il permet de plus d'analyser le courant circulant dans le dispositif et par conséquent dans l'installation à surveiller.

Il permet en outre de déclencher l'ouverture du circuit après un temps donné t1 qui peut être fonction du dépassement du seuil.

Il permet enfin de refermer le circuit après un temps donné t2.

Sur la figure 4, on a représenté en trait plein, la courbe de réponse (a) du limiteur de puissance suivant l'invention.

Une surface (b) hachurée représente la zone de fonctionnement de l'interrupteur commandé 3 (Fig 1).

Une surface (c) formée d'une trame de points, indique la zone de fonctionnement d'un disjoncteur (non représenté) associé au limitateur suivant l'invention.

Le dispositif électronique étant programmable, on peut paramétrer plusieurs seuils d'intensité en affectant à chacun un temps d'attente avant d'ordonner l'ouverture de l'interrupteur.

La courbe de réponse telle que représentée à la figure 4 est entièrement paramétrable et extrêmement précise contrairement aux courbes de réponse de systèmes de l'art antérieur.

Le dispositif électronique suivant l'invention qui vient d'être décrit est un dispositif monophasé.

Il peut également être réalisé sous forme triphasée.

Dans le cas d'une installation monophasée, le dispositif électronique de limitation de puissance mesure le courant passant dans chaque phase et peut au choix :
- couper un seul pôle de l'installation monophasée,
- coupler les deux pôles de l'installation monophasée.

Dans le cas d'une installation triphasée, le dispositif électronique de limitation de puissance mesure le courant passant dans la phase et peut au choix:
- couper toute l'installation dès que le courant d'une des phases dépasse un seuil donné,
- couper toute l'installation dès que le courant de l'ensemble des phases dépasse un seuil donné,
- couper uniquement la phase dont le courant dépasse un seuil donné, etc...

Les valeurs des seuils et de leurs temps d'ouverture sont idéalement stockées dans un composant électronique programmable depuis un micro-ordinateur.

L'ouverture du circuit est idéalement obtenue par la commande d'un relais.

L'utilisation de l'électronique permet d'économiser l'endurance du relais et donc d'augmenter très nettement sa durée de vie. Pour cela, lorsque l'ouverture est décidée, le dispositif électronique attend que la courbe de courant (sinusoïde) passe par zéro. Il n'y a donc pas d'arc électrique à l'ouverture des contacts, donc pas d'usure contrairement aux dispositifs existants de l'état de la technique (bilames, disjoncteurs, ...).

Selon les applications et le degré de sécurité, on peut choisir un relais ouvert ou fermé au repos.

## Revendications

1. Limiteur de puissance électrique consommée dans une installation, comprenant des moyens (1) de mesure du courant circulant dans un conducteur (2,4) d'alimentation de l'installation, des moyens (5) d'analyse dudit courant en fonction d'au moins un seuil d'intensité admissible et des moyens (3) d'interruption du courant sur le conducteur d'alimentation (2,4) en cas de dépassement dudit seuil d'intensité, **caractérisé en ce que** les moyens (5) d'analyse sont associés à des moyens (10, 34) de réglage d'au moins un temps d'attente de déclenchement de l'ouverture des moyens (3) d'interruption du courant sur le conducteur d'alimentation (2,4) en cas de dépassement dudit au moins un seuil d'intensité, chaque temps d'attente de déclenchement de l'ouverture étant affecté respectivement à un seuil d'intensité admissible des moyens d'analyse (5).

2. Limiteur de puissance électrique suivant la revendication 1, **caractérisé en ce que** les moyens de mesure du courant circulant dans le conducteur (2,4) d'alimentation de l'installation comprennent un transformateur de courant comprenant un enroulement (8) entourant le conducteur (2) d'alimentation et lesdits moyens d'analyse (5) comprennent un microprocesseur (5a) programmé pour commander l'ouverture et la fermeture des moyens d'interruption en fonction de conditions d'intensité et de temps de dépassement prédéterminées, et connecté aux moyens (10, 34) de réglage.

3. Limiteur de puissance électrique suivant la revendication 2, **caractérisé en ce que** les moyens (10) de réglage sont aptes à régler des conditions de rétablissement du courant dans le conducteur d'alimentation (2,4).

4. Limiteur de puissance électrique suivant la revendication 1, **caractérisé en ce que** les moyens de mesure du courant circulant dans le conducteur d'alimentation (2,4) comprennent une résistance (30) connectée en série dans ledit conducteur, et **en ce que** les moyens d'analyse (2) comprennent un comparateur (32) recevant sur une de ses entrées la tension U détectée engendrée aux bornes de la résistance (30) et connecté par son autre entrée à une tension de référence Uref correspondant au seuil d'intensité admissible.

5. Limiteur de puissance électrique suivant la revendication 4, **caractérisé en ce qu'**à la sortie du comparateur (32) sont connectés les moyens (34) de réglage.

6. Limiteur de puissance électrique suivant la revendication 5, **caractérisé en ce que** lesdits moyens de réglage (34) comportent un amplificateur (36) auquel est associé un circuit (37) de réglage du temps de déclenchement du signal de commande des moyens de coupure (3).

7. Limiteur de puissance suivant l'une des revendications 1 à 6, **caractérisé en ce que** les moyens de coupure (3) comprennent un interrupteur (14;40) commandé par un enroulement (12;38) connecté à la sortie desdits moyens d'analyse (5).

8. Limiteur de puissance suivant la revendication 7, **caractérisé en ce que** ledit enroulement (12;38) est connecté aux moyens d'analyse par l'intermédiaire desdits moyens de réglage (10;34).
